## Europäisches Patentamt

## European Patent Office

## Office européen des brevets

(19)

(11) Veröffentlichungsnummer : **0 127 046 B1**

(12) **EUROPÄISCHE PATENTSCHRIFT**

(45) Veröffentlichungstag der Patentschrift :
02.03.88

(21) Anmeldenummer : 84105430.7

(22) Anmeldetag : 14.05.84

(51) Int. Cl.⁴ : **C 08 G 63/20, C 08 G 63/66, C 08 G 63/52, C 09 K 3/10, C 09 D 3/68, C 08 G 65/32**

(54) (Meth)-Acryloylgruppen enthaltende Di- und Polyester, Verfahren zu ihrer Herstellung und ihre Verwendung.

(30) Priorität : 26.05.83 DE 3319013

(43) Veröffentlichungstag der Anmeldung :
05.12.84 Patentblatt 84/49

(45) Bekanntmachung des Hinweises auf die Patenterteilung : 02.03.88 Patentblatt 88/09

(84) Benannte Vertragsstaaten :
**AT BE DE FR GB IT NL**

(56) Entgegenhaltungen :
**BE-A- 548 201**
**DE-A- 2 645 657**
**GB-A- 2 025 996**
**US-A- 3 431 227**

(73) Patentinhaber : **BAYER AG**
**Konzernverwaltung RP Patentabteilung**
**D-5090 Leverkusen 1 Bayerwerk (DE)**

(72) Erfinder : **Meixner, Jürgen, Dr.**
**Bethelstrasse 18**
**D-4150 Krefeld 1 (DE)**
Erfinder : **Wulff, Claus, Dr.**
**Richard-Strauss-Strasse 21**
**D-4150 Krefeld 1 (DE)**
Erfinder : **Traenckner, Hans-Joachim, Dr.**
**Amselweg 2**
**D-3032 Fallingbostel (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 127 046 B1

**0 127 046**

## Beschreibung

Die Erfindung betrifft (Meth)-Acryloylgruppen enthaltende Di- und Polyester auf Basis von (Meth)-Acrylsäure, oxalkyliertem Buten-2-diol-1,4 sowie gegebenenfalls weiteren zwei- und/oder dreiwertigen gesättigten Alkoholen oder deren Oxalkylierungsprodukten, Dicarbonsäuren oder deren Anhydriden, die durch Strahlenhärtung und überraschenderweise auch durch Härtung mittels Sikkativmetallsalzen und Hydroperoxiden in vernetzte Produkte überführt werden können.

Vorzugsweise finden sie als Bindemittel für Überzugsoder Spachtelmassen sowie zur Herstellung von Formkörpern Verwendung.

Es ist bekannt (DE-A-28 04 216), ungesättigte, monomerenfreie Polyester, die keine (Meth)-Acryloylgruppen enthalten, mit Sikkativmetallsalzen und Hydroperoxid auszuhärten. Diese enthalten Ether des Allylalkohols (z. B. Trimethylolpropandiallylether) als reaktive Komponente. Die Reaktivität (besonders bei der Strahlenhärtung) sowie die Witterungsbeständigkeit solcher Systeme ist jedoch für einige Anwendungsbereiche zu gering.

Dem Fachmann ist weiter geläufig, daß oligomere, mindestens zwei (Meth)-Acryloylgruppen tragende Verbindungen durch Strahlenhärtung (z. B. Elektronenstrahlhärtung oder UV-Härtung) in vernetzte Produkte überführt werden können. Jedoch ist eine Härtung mit Sikkativmetallsalzen und Hydroperoxid für eine technische Verwendung zu langsam und unvollständig.

Es ist ferner bekannt (DE-A-27 36 627), spezielle (Meth)-Acryloylgruppen tragende Verbindungen der Härtung mit Metallsalzen von Sikkativsäuren und Hydroperoxid zugänglich zu machen, indem gleichzeitig zu (Meth)-Acryloylgruppen tragenden Verbindungen teilacrylierte Di-, Tri- oder Tetraole vorhanden sind, deren nicht veresterte Hydroxylgruppen durch (Meth)-Allylalkohol oder Benzylalkohol verethert worden sind. Für eine praktische Anwendung sind jedoch noch schnellere Härtungszeiten erforderlich bzw. wünschenswert.

Aufgabe der vorliegenden Erfindung ist es, (Meth)-Acryloylgruppen enthaltende Systeme bereitzustellen, die neben der Strahlenhärtung auch der Härtung mit Sikkativmetallsalz/Hydroperoxid zugänglich sind. Dabei soll auf die Anwesenheit von Allyl- bzw. Benzylethergruppen verzichtet werden, um eventuelle Nebenreaktionen dieser Gruppen mit Luftsauerstoff sowie schlechte Witterungsbeständigkeit der daraus gefertigten Lacke zu verhindern.

Die Aufgabe wurde dadurch gelöst, daß Di- und Polyester hergestellt wurden, die in cokondensierten Einheiten oxalkyliertes Buten-2-diol-1,4, gegebenenfalls weitere zwei- und/oder dreiwertige gesättigte Alkohole, Dicarbonsäuren oder deren Anhydride und zwingend (Meth)-Acrylsäure enthalten.

Es ist als äußerst überraschend zu werten, daß erfindungsgemäße Produkte durch die Anwesenheit von cokondensiertem oxalkyliertem Buten-2-diol-1,4 auch in Abwesenheit von Allyl- oder Benzylethergruppen außerordentlich schnell und vollständig aushärten. Ferner ist es überraschend, daß die erfindungsgemäßen Systeme auch dann schnell und vollständig durch Sikkativmetallsalz/Hydroperoxid aushärten, wenn keine ungesättigten Dicarbonsäureeinheiten im Molekül vorhanden sind.

Gegenstand der Erfindung sind somit (Meth)-Acrylolgruppen enthaltende Di- und Polyester aus cokondensierten Einheiten von :

(A) 10 bis 80 Gew.-%, vorzugsweise 20 bis 75 Gew.-%, oxalkyliertem Buten-2-diol-1,4 mit einem Oxalkylierungsgrad von 1 bis 4, vorzugsweise 2 bis 4,

(B) 0 bis 60 Gew.-%, vorzugsweise 0 bis 45 Gew.-%, mindestens einer gesättigten oder aromatischen oder ethylenisch ungesättigten Dicarbonsäure oder deren Anhydrid,

(C) 0 bis 60 Gew.-%, vorzugsweise 0 bis 45 Gew.-%, mindestens eines zwei oder dreiwertigen gesättigten Alkohols oder dessen Oxalkylierungsprodukts mit einem Oxalkylierungsgrad von 1 bis 4 im Falle des zweiwertigen Alkohols bzw. mit einem Oxalkylierungsgrad von 2 bis 6 im Falle des dreiwertigen Alkohols und

(D) 10 bis 60 Gew.-%, vorzugsweise 14 bis 55 Gew.-%, Acrylsäure, Methacrylsäure oder deren Mischungen,

für den Fall der Diester aus (A) und (D) bestehen diese aus cokondensierten Einheiten von 47,8 bis 65 Gew.-% der Komponente (A) und 35-52,2 Gew.-% der Komponente D.

Als gesättigte oder aromatische oder ethylenisch ungesättigte Dicarbonsäure (B) können beispielsweise eingesetzt werden : Bernsteinsäure, Adipinsäure, Hexahydrophthalsäure, Tetrahydrophthalsäure, Endo-methylentetrahydrophthalsäure, o-Phthalsäure, Isophthalsäure, Terephthalsäure, Maleinsäure, Fumarsäure und Itaconsäure. Bevorzugt sind Maleinsäure, Fumarsäure, Phthalsäure und Adipinsäure.

Beispiele für aliphatisch gesättigte zwei- oder dreiwertige Alkohole (C) sind : Ethylenglykol, Propylenglykol-1,2, Propylenglykol-1,3, Butandiol-1,2, Butandiol-1,3, Butandiol-1,4, Pentandiol-1,3, Hexandiol-1,6, 2-Ethylhexandiol-, Glycerin, Trimethylolethan, Trimethylolpropan, Butantriole, Pentantriole und Hexantriole. Bevorzugt sind Ethylenglykol, Propylenglykol-1,2 und Trimethylolpropan. Es können auch oxalkylierte Derivate der gesättigten Alkohole eingesetzt werden. Bei den zweiwertigen Alkoholen sollte für diesen Fall der Oxalkylierungsgrad 1 bis 4, vorzugsweise 2 bis 4, bei den dreiwertigen Alkoholen 2 bis 6, vorzugsweise 2,5 bis 4 betragen.

Der Oxalkylierungsgrad gibt die Anzahl der Mole 1,2-Alkylenoxid an, die an ein Mol Diol bzw. Triol im

2

Durchschnitt angelagert worden sind. Als 1,2-Alkylenoxide kommen Ethylenoxid oder Propylenoxid oder deren Mischungen in Frage.

Gegenstand der vorliegenden Erfindung ist auch ein Verfahren zur Herstellung von (Meth)-Acryloylgruppen enthaltenden Di- und Polyestern, dadurch gekennzeichnet, daß

(A) 10 bis 80 Gew.-%, vorzugsweise 20 bis 75 Gew.-%, oxalkyliertes Buten-2-diol-1,4 mit einem Oxalkylierungsgrad von 1 bis 4, vorzugsweise 2 bis 4,

(B) 0 bis 60 Gew.-%, vorzugsweise 0 bis 45 Gew.-%, mindestens einer gesättigten oder aromatischen oder ethylenisch ungesättigten Dicarbonsäure oder deren Anhydrid,

(C) 0 bis 60 Gew.-%, vorzugsweise 0 bis 45 Gew.-%, mindestens eines zwei- oder dreiwertigen gesättigten Alkohols und/oder dessen Oxalkylierungsprodukts mit einem Oxalkylierungsgrad von 1 bis 4 im Falle der zweiwertigen Alkohole bzw. mit einem Oxalkylierungsgrad von 2 bis 6 im Falle der dreiwertigen Alkohole und

(D) 10 bis 60 Gew.-%, vorzugsweise 14 bis 51 Gew.-% Acrylsäure, Methacrylsäure oder deren Mischungen —

im Falle der Diester aus (A) und (D) werden 47,8 bis 65 Gew.-% der Komponente (A) und 35-52,2 Gew.-% der Komponente (D) eingesetzt — bei Temperaturen von 75 bis 130 °C in einem wasserunlöslichen Lösungsmittel unter azeotropen Bedingungen in Gegenwart von sauren Katalysatoren und Inhibitoren so lange erhitzt werden, bis sich kein Wasser mehr abscheidet und das verbleibende Lösungsmittel abdestilliert wird. Bei Mitverwendung von ethylenisch ungesättigten Dicarbonsäuren kann es von Vorteil sein, die Polykondensation unter Stickstoff durchzuführen. Es ist natürlich auch möglich, statt einer azeotropen einstufigen Kondensation auch eine Veresterung in mehreren Schritten durchzuführen, z. B. indem in einer Schmelzkondensation bei 150 °C-180 °C die Komponenten A bis C oder Teile daraus vorverestert werden und das entstandene Vorprodukt anschließend unter azeotropen Bedingungen mit (Meth)-Acrylsäure weiterverestert wird.

Saure Katalysatoren, die die Veresterung beschleunigen, sind z. B. Schwefelsäure, p-Toluolsulfonsäure und Naphthalinsulfonsäure. Sie werden in Mengen von 0,1 bis 3 Gew.-%, bezogen auf Summe der Komponenten (A) bis (D), eingesetzt.

Die Säurezahlen der Di- und Polyester können 1-50, vorzugsweise 3-40, mg KOH pro g Substanz und die als Zahlenmittel bestimmten durchschnittlichen Molekulargewichte $\overline{M}n$ 240-5000, vorzugsweise 320-2000 betragen. Um die erfindungsgemäßen Produkte vor unerwünschter vorzeitiger Polymerisation zu bewahren, empfiehlt es sich, bereits bei der Herstellung 0,001-0,1 Gew.-% Polymerisationsinhibitoren oder Antioxidantien, bezogen auf Summe aus (A) bis (D), zuzusetzen. Geeignete Stabilisatoren sind z. B. in « Methoden der organische Chemie » (Houben Weyl), 4. Auflage, Band XIV/1, S. 433 ff, Georg Thieme Verlag, Stuttgart 1961, beschrieben.

Die Umsetzungsprodukte können ohne zusätzliche copolymerisierbare Monomere oder Lösungsmittel zur Anwendung gelangen, da es sich um niedrig viskose Produkte handelt, gewünschtenfalls ist es jedoch möglich, die erfindungsgemäßen Polykondensate mit inerten Lösungsmitteln oder copolymerisierbaren Monomeren abzumischen. Die Zusätze können bis etwa 60 Gew.-%, vorzugsweise bis 40 Gew.-%, bezogen auf Mischung Reaktionsprodukt und Lösungsmittel oder Monomere, betragen.

Weiterhin ist es ebenfalls möglich, die erfindungsgemäßen Umsetzungsprodukte mit Hilfe externer Emulgatoren und gegebenenfalls üblicher in der Emulsionstechnik angewandter Hilfsmittel in Wasser zu emulgieren und als Emulsionen zu applizieren.

Hierfür geeignete Emulgatoren sind z. B. in Ullmanns Encyclopädie der techn. Chemie, Bd. 10, 4. Auflage, Kap. Emulsionen, S. 449 ff beschrieben.

Besonders bevorzugte Emulgatoren sind copolymerisierbare ungesättigte Alkylenoxygruppen enthaltende Polyesteremulgatoren, wie sie in DE-OS 29 05 666 und deutscher Patentanmeldung P 32 00 907.0 beschrieben werden.

Die Emulsionen können 10-70 Gew.-%, vorzugsweise 30-70 Gew.-%, der erfindungsgemäßen Umsetzungsprodukte enthalten. Die Herstellung der Emulsionen kann durch Einrühren von Wasser in das Gemisch aus erfindungsgemäßem Di- und Polyester und Emulgator z. B. durch einfaches Rühren oder mittels Dissolver erfolgen.

Zur Ausbildung einer feinteiligen Emulsion, d. h. zur besseren Einbringung der Scherkräfte ist portionsweiser Wasserzusatz bei Temperaturen unter 30 °C vorteilhaft. Bei optimaler Scherung werden Öl-in-Wasser-Emulsionen gebildet.

Die erfindungsgemäßen Umsetzungsprodukte können die zur Erzielung besonderer technischer Effekte notwendigen Komponenten wie Füllstoffe, Pigmente, Farbstoffe, Thixotropiermittel und Glättmittel, Abdeckmittel zur Ausschaltung der Luftinhibierung, Mattierungsmittel und Verlaufsmittel usw. in üblichen Mengen enthalten.

Verwendung finden die erfindungsgemäßen Polykondensationsprodukte als strahlenhärtbare oder durch Sikkativmetall/Hydroperoxid härtbare Bindemittel und Überzugsmittel, Kitte oder Spachtelmassen oder zur Herstellung von Formkörpern.

Falls die erfindungsgemäßen Produkte Verwendung als Überzugsmittel finden, kann das Auftragen auf geeignete Substrate mittels in der Lackindustrie üblichen Methoden, wie Sprühen, Walzen, Rakeln,

# 0 127 046

Drucken, Tauchen, Fluten, Streichen oder Pinseln erfolgen.

Geeignete Substrate sind Papier, Kartonagen, Folien, Leder, Holz, Kunststoffe, Textilen, keramische Materialien oder Metalle.

Die Härtung der Produkte kann mittels energiereicher Strahlung, wie UV-Licht, Elektronen- oder Gammastrahlen oder durch thermische Polymerisationsinitiatoren oder bevorzugt durch Härtung mit Metallsalzen von Sikkativsäuren und Hydroperoxiden bei Raumtemperatur erfolgen.

Unter Metallsalzen von Sikkativsäuren werden Kobalt- und Mangansalze von Säuren wie Leinölfettsäuren, Tallölfettsäuren, Sojafettsäuren, von Harzsäuren wie Abietinsäure und Naphthensäure oder von Essigsäure oder Isooctansäure verstanden. Bevorzugt wird Kobaltoctoat, Kobaltnaphthenat und Kobaltacetat. Die Metallsalze der Sikkativsäuren werden vorzugsweise in Form von wäßrigen oder organischen Lösungen in solchen Mengen eingesetzt, daß der Metallgehalt, bezogen auf Di- und/oder Polyester, 0,005 bis 1 Gew.-% entspricht.

Als Hydroperoxide seien beispielsweise genannt : tert.-Butylhydroperoxid, Cumolhydroperoxid, 2,5-Dimethylhexan-2,5-hydroperoxid, Cyclohexanonhydroperoxid, Methylethylketonhydroperoxid, Diisopropyl-benzol-monohydroperoxid, Wasserstoffperoxid. Vorzugsweise werden die Hydroperoxide in Mengen von 1 bis 10 Gew.-%, bezogen auf Di- und/oder Polyester, eingesetzt.

Die nachfolgenden Beispiele sollen die Erfindung näher erklären. Die Viskositätsmessungen wurden im Höppler Kugelfallviskosimeter (DIN 53015) bei 20 °C durchgeführt. Die angegebenen Prozentgehalte beziehen sich auf das Gewicht. In allen Beispielen wurde die Kondensation in Gegenwart von 0,75 Gew.-% p-Toluolsulfonsäure als Katalysator und 0,02 Gew.-% p-Methoxyphenol + 0,02 Gew.-% Di-tert.-butylhydrochinon als Inhibitoren, stets bezogen auf Summe der Komponenten (A) und (D), eingesetzt.

### Beispiel 1

98 g Maleinsäureanhydrid, 176 g oxethyliertes Buten-2-diol-1,4 mit einem Oxethylierungsgrad von 2, 80,4 g Trimethylolpropan und 108 g Acrylsäure werden 70 %ig in Toluol gelöst und bei 110-120 °C so lange unter Stickstoff erhitzt, bis sich kein Wasser mehr abscheidet. Nach Abkühlen wird bei 50-90 °C das Lösungsmittel unter Vakuum abdestilliert. Der Polyester hat folgende Kennzahlen : Säurezahl : 9, Viskosität : 10 100 mPa · s.

### Beispiel 2

98 g Maleinsäureanhydrid und 88 g oxethyliertes Buten-2-diol-1,4 mit einem Oxethylierungsgrad von 2 werden zusammen bei 150 °C unter $N_2$ Atmosphäre 4 Stunden erhitzt. Nach Zugabe von 176 g oxethyliertem Buten-2-diol-1,4 (Oxethylierungsgrad 2), 57,6 g Acrylsäure und 166 g Toluol wird unter N2 bei 110-120 °C so lange erhitzt, bis sich kein Wasser mehr abscheidet. Nach Abkühlen wird bei 50-90 °C das Lösungsmittel unter Vakuum abdestilliert. Der Polyester hat folgende Kennzahlen : Säurezahl : 10 ; Viskosität : 2 630 mPa · s.

### Beispiel 3

146 g Adipinsäure, 176 g oxethyliertes Buten-2-diol-1,4 (Oxethylierungsgrad 2), 80,4 g Trimethylolpropan und 108 g Acrylsäure werden wie in Beispiel 1, jedoch unter Luftzufuhr statt unter $N_2$ kondensiert. Der Polyester hat eine Säurezahl von 10,5 und eine Viskosität von 3 570 mPa · s.

### Beispiel 4

74 g Phthalsäureanhydrid, 49 g Maleinsäureanhydrid, 80,4 g Trimethylolpropan, 176 g oxethyliertes Buten-2-diol-1,4 (Oxethylierungsgrad 2) und 108 g Acrylsäure werden wie in Beispiel 1 kondensiert. Der Polyester hat folgende Kennzahlen : Saürezahl : 35 ; Viskosität : 18 300 mPa · s.

### Beispiel 5

98 g Maleinsäureanhydrid, 116,2 g oxethyliertes Buten-2-diol-1,4 (Oxethylierungsgrad 2), 204,6 g oxethyliertes Trimethylolpropan (Oxethylierungsgrad 4) und 72 g Acrylsäure werden wie Beispiel 1 kondensiert. Polyesterkennzahlen : Säurezahl = 7 ; Viskosität = 34 600 mPa · s.

### Beispiel 6

98 g Maleinsäureanhydrid, 176 g oxethyliertes Buten-2-diol-1,4 (Oxethylierungsgrad 2), 80,4 g Trimethylolpropan und 129 g Methacrylsäure werden wie in Beispiel 3 kondensiert. Der Polyester hat folgende Kennzahlen : Säurezahl : 17,5 ; Viskosität : 4 150 mPa · s.

### Beispiel 7

4

98 g Maleinsäureanhydrid, 330 g oxpropyliertes Buten-2-diol-1,4 (Oxpropylierungsgrad 4), 80,4 g Trimethylolpropan und 108 g Acrylsäure werden wie in Beispiel 1 kondensiert. Der Polyester hat folgende Kennzahlen : Säurezahl : 10 ; Viskosität : 4 350 mPa · s.

Beispiel 8

148 g Phthalsäureanhydrid, 176 g oxethyliertes Buten-2-diol-1,4 (Oxethylierungsgrad 2) und 80,4 g Trimethylolpropan werden unter N₂ bei 150 °C bis zu einer Säurezahl von 23 erhitzt. Nach Zugabe von 108 g Acrylsäure, 3,5 g p-Toluol-sulfonsäure und 200 g Toluol wird bei 100-120 °C unter N₂ so lange erhitzt, bis sich kein Wasser mehr abscheidet. Nach Abkühlen wird bei 50-90 °C das Lösungsmittel im Vakuum abdestilliert. Der Polyester hat folgende Kennzahlen : Säurezahl : 19 ; Viskosität : 35 770 mPa · s.

Beispiel 9

176 g oxethyliertes Buten-2-diol-1,4 (Oxethylierungsgrad 2) und 144 g Acrylsäure werden wie in Beispiel 3 kondensiert. Der Diester hat folgende Kennzahlen : Säurezahl : 5 ; Viskosität : 43 mPa · s. Das Produkt kann als reaktiver Verdünner eingesetzt werden.

Vergleichsbeispiel 1

98 g Maleinsäureanhydrid, 150 g oxethyliertes Buten-2-diol-1,4 (Oxethylierungsgrad 2) und 54 g Benzylalkohol werden unter N₂ bei 150-180 °C bis zu einer Säurezahl von 32 kondensiert ; Viskosität : 19 000 mPa · s. Dieser Vergleich (Ergebnisse siehe Tabellen 1 und 2) zeigt, daß bei Abwesenheit von (Meth)Acryloylgruppen trotz Vorhandensein von oxethylierten Butendioleinheiten keine befriedigende Härtung durch Sikkativmetallsalz/Hydroperoxid erfolgt.

Vergleichsbeispiel 2

Beispiel 3 wird exakt wiederholt mit der Änderung, daß anstelle von 176 g oxethyliertem Buten-2-diol-1,4 (Oxethylierungsgrad 2) eine äquivalente Menge (d. h. 178 g) oxethyliertes Butandiol-1,4 (Oxethylierungsgrad 2) eingesetzt wird. Der erhaltene Polyester hat folgende Kennzahlen : Säurezahl 13, Viskosität 2 700 mPa · s. Das Verhalten bei der Härtung mit Sikkativmetallsalz/Hydroperoxid geht aus den Tabellen 1 und 2 hervor.

Vergleichsbeispiel 3

Beispiel 9 wird exakt wiederholt mit der Änderung, daß anstelle von 176 g oxethyliertem Buten-2-diol-1,4 (Oxethylierungsgrad 2) eine äquivalente Menge Buten-2-diol-1,4 (88 g) eingesetzt wird. Während der Kondensation entsteht aus dem Buten-2-diol-1,4 durch Wasserabspaltung flüchtiges Dihydrofuran. Im wesentlichen wird daneben Acrylsäure zurückerhalten.

Härtung der Produkte :

Als Maß für die Geschwindigkeit der Aushärtung sind die Gelierzeiten angegeben. Sie wurden durch Blockhärtung der Polyester (10 g Ansätze) bei 20 °C im Wasserbad ermittelt. Die Härtungen wurden durch Zusatz von 4 % Cyclohexanonhydroperoxid und 1,2 % Kobaltoctoatlösung mit einem Metallgehalt von 2,2 % eingeleitet.
Die Ergebnisse sind in Tabelle 1 zusammengefaßt.

Tabelle 1

| Beispiel-Nr | Gelierzeit (min) |
|---|---|
| 1 | 10 |
| 2 | 24 |
| 3 | 9 |
| 4 | 7 |
| 5 | 42 |
| 6 | 5 |
| 7 | 60 |
| 8 | 8 |
| 9 | 41 |
| Vergleichsbeispiel 1 | 240 |
| Vergleichsbeispiel 2 | 100 |

Anwendung der erfindungsgemäßen Polyester als Bindemittel für wasseremulgierbare Überzugsmittel :

**0 127 046**

Zur Herstellung von Emulsionen wurden je 200 g der Polyesterharze der Beispiele 1-8 sowie der Vergleichsbeispiele 1 und 2 mit 50 g eines Emulgatorpolyesters (1) gemischt, mit jeweils 110 g Wasser im Dissolver bei 8 000 U/min 2 Minuten geschert und anschließend mit Wasser unter Rühren (1 000 U/min) auf 50 % Festkörpergehalt eingestellt. Es entstanden Ol-in-Wasser-Emulsionen. Diese Emulsionen wurden mit 2 % Kobaltacetatlösung (5 % Metallgehalt) und 3 % einer 35 %igen wäßrigen $H_2O_2$-Lösung versetzt und auf Glasplatten aufgezogen (Naßfilmdicke: 90 μm). Die Trocknungszeiten bei Raumtemperatur (24 °C) sind in der Tabelle 2 aufgeführt.

(1) Der Emulgatorpolyester wird gemäß DE-A-32 00 907.0, Seite 14, Zeilen 12-16 hergestellt. Danach werden 175 g Maleinsäureanhydrid, 643 g Polyethylenglykol (Molgewicht $\overline{M}n$ 400) und 214 g Trimethylol-propandibenzylether unter $N_2$-Strom bei 190 °C in der Schmelze bis zur Säurezahl 7 kondensiert. Die OH-Zahl des Polyesters beträgt 36 und die Viskosität 20 500 mPa · s.

Tabelle 2

| Beispiel-Nr. | Zeit bis zur Durchhärtung (min) |
|---|---|
| 1 | 105 |
| 2 | 97 |
| 3 | 130 |
| 4 | 92 |
| 5 | 124 |
| 6 | 79 |
| 7 | 190 |
| 8 | 115 |
| Vergleichsbeispiel 1 | mehr als 9 Stunden |
| Vergleichsbeispiel 2 | 360 |

**Patentansprüche**

1. (Meth)-Acryloylgruppen enthaltende Di- und Polyester aus cokondensierten Einheiten von
(A) 10 bis 80 Gew.-% oxalkyliertem Buten-2-diol-1,4 mit einem Oxalkylierungsgrad von 1 bis 4,
(B) 0 bis 60 Gew.-% mindestens einer gesättigten oder aromatischen oder ethylenisch ungesättigten Dicarbonsäure oder deren Anhydrid,
(C) 0 bis 60 Gew.-% mindestens eines zwei- oder dreiwertigen gesättigten Alkohols oder dessen Oxalkylierungsprodukts mit einem Oxalkylierungsgrad von 1 bis 4 im Falle des zweiwertigen Alkohols bzw. einem Oxalkylierungsgrad von 2 bis 6 im Falle des dreiwertigen Alkohols und
(D) 10 bis 60 Gew.-% Acrylsäure, Methacrylsäure oder deren Mischungen.

2. (Meth)-Acryloylgruppen enthaltende Diester gemäß Anspruch 1, dadurch gekennzeichnet, daß sie aus cokondensierten Einheiten von 47,8 bis 65 Gew.-% der Komponente (A) und 35 bis 52,2 Gew.-% der Komponente (D) bestehen.

3. Verfahren zur Herstellung von (Meth)-Acryloylgruppen enthaltenden Di- und Polyestern, dadurch gekennzeichnet, daß
(A) 10 bis 80 Gew.-% oxalkyliertes Buten-2-diol-1,4 mit einem Oxalkylierungsgrad von 1 bis 4,
(B) 0 bis 60 Gew.-% mindestens einer gesättigten oder aromatischen oder ethylenisch ungesättigten Dicarbonsäure oder deren Anhydrid,
(C) 0 bis 60 Gew.-% mindestens eines zwei- oder dreiwertigen gesättigten Alkohols oder dessen Oxalkylierungsprodukts mit einem Oxalkylierungsgrad von 1 bis 4 im Falle des zweiwertigen Alkohols bzw. einem Oxalkylierungsgrad von 2 bis 6 im Falle des dreiwertigen Alkohols und
(D) 10 bis 60 Gew.-% Acrylsäure, Methacrylsäure oder deren Mischungen —
im Falle der Diester aus (A) und (D) werden 47,8 bis 65 Gew.-% der Komponente (A) und 35 bis 52,2 Gew.-% der Komponente (D) eingesetzt — bei Temperaturen von 75 bis 130 °C in einem wasserunlöslichen Lösungsmittel unter azeotropen Bedingungen in Gegenwart von sauren Katalysatoren und Inhibitoren so lange erhitzt werden, bis sich kein Wasser mehr abscheidet und das verbleibende Lösungsmittel abdestilliert wird.

4. Verwendung der Polyester gemäß den Ansprüchen 1 und 2 als strahlenhärtbare oder durch Sikkativmetallsalz/Hydroperoxid härtbare Bindemittel für Überzugsmittel, Kitte oder Spachtelmasse oder zur Herstellung von Formkörpern.

**Claims**

1. Di- and polyesters containing-(meth)-acryloyl groups and consisting of co-condensed units of
(A) 10 to 80 % by weight of alkoxylated 2-butene-1,4-diol with a degree of alkoxylation of 1 to 4,
(B) 0 to 60 % by weight of at least one saturated or aromatic or ethylenically unsaturated dicarboxylic acid or anhydride thereof,

(C) 0 to 60 % by weight of at least one di- or trihydric saturated alcohol or alkoxylation product thereof with a degree of alkoxylation of 1 to 4 in the case of the dihydric alcohol or with a degree of alkoxylation of 2 to 6 in the case of the trihydric alcohol and

(D) 10 to 60 % by weight of acrylic acid, methacrylic acid or mixtures thereof.

2. Diesters containing (meth)-acryloyl groups, according to Claim 1, characterised in that they consist of co-condensed units of 47.8 to 65 % by weight of component (A) and 35 to 52.2 % by weight of component (D).

3. Process for the production of di- and polyesters containing (meth)-acryloyl groups, characterised in that

(A) 10 to 80 % by weight of alkoxylated 2-butene-1,4-diol with a degree of alkoxylation of 1 to 4,

(B) 0 to 60 % by weight of at least one saturated or aromatic or ethylenically unsaturated dicarboxylic acid or anhydride thereof,

(C) 0 to 60 % by weight of at least one di- or trihydric saturated alcohol or alkoxylation product thereof with a degree of alkoxylation of 1 to 4 in the case of the dihydric alcohol or with a degree of alkoxylation of 2 to 6 in the case of the trihydric alcohol and

(D) 10 to 60 % by weight of acrylic acid, methacrylic acid or mixtures thereof —

in the case of the diesters of (A) and (D) 47.8 to 65 % by weight of component (A) and 35 to 52.2 % by weight of component (D) are used — are heated at temperatures of 75 to 130 °C in a water-insoluble solvent under azeotropic conditions in the presence of acid catalysts and inhibitors until no more water separates off and the remaining solvent is distilled off.

4. Use of the polyesters according to Claims 1 and 2 as binders, which are radiation-hardenable of are hardenable by means of siccative metal salt/hydroperoxide, for surface coatings, putties or surfacer or for the production of mouldings.

## Revendications

1. Di- et polyesters contenant des groupes (méth)acryloyle, et consistant en motifs cocondensés de :

(A) 10 à 80 % en poids de butène-2-diol-1,4-oxyalkylé à un taux d'oxyalkylation de 1 à 4,

(B) 0 à 60 % en poids d'au moins un acide dicarboxylique saturé ou aromatique ou à insaturation éthylénique ou son anhydride,

(C) 0 à 60 % en poids d'au moins un alcool di- ou trivalent saturé ou son produit d'oxyalkylation à un taux d'oxyalkylation de 1 à 4 dans le cas d'un alcool divalent et à un taux d'oxyalkylation de 2 à 6 dans le cas d'un alcool trivalent, et

(D) 10 à 60 % en poids d'acide acrylique, d'acide méthacrylique ou leurs mélanges.

2. Diesters contenant des groupes (méth)acryloyle selon la revendication 1, caractérisés en ce qu'ils consistent en motifs cocondensés de 47,8 à 65 % en poids du composant (A) et de 35 à 52,2 % en poids du composant (D).

3. Procédé de préparation des di- et polyesters contenant des groupes (méth)acryloyle, caractérisé en ce que l'on chauffe :

(A) 10 à 80 % en poids de butène-2-diol-1,4 oxyalkylé à un taux d'oxyalkylation de 1 à 4,

(B) 0 à 60 % en poids d'au moins un acide dicarboxylique saturé ou aromatique ou à insaturation éthylénique ou son anhydride,

(C) 0 à 60 % en poids d'au moins un alcool saturé di- ou trivalent ou son produit d'oxyalkylation à un taux d'oxyalkylation de 1 à 4 dans le cas d'un alcool divalent et à un taux d'oxyalkylation de 2 à 6 dans le cas d'un alcool trivalent et

(D) 10 à 60 % en poids d'acide acrylique, d'acide méthacrylique ou leurs mélanges —

dans le cas des diesters de (A) et (D), on met en œuvre 47,8 à 65 % en poids du composant (A) et 35 à 52,2 % en poids du composant (D) — à des températures de 75 à 130 °C dans un solvant insoluble dans l'eau dans des conditions azéotropiques en présence de catalyseurs acides et d'inhibiteurs jusqu'à ce qu'il ne se sépare plus d'eau, après quoi on distille le solvant résiduel.

4. Utilisation des polyesters selon les revendications 1 et 2 en tant que liants durcissables sous l'action de radiations ou sous l'action d'un système sel métallique siccatif/hydroperoxyde pour des produits de revêtement, des mastics ou des masses à appliquer à la spatule ou pour la fabrication d'objets moulés.